# EUROPEAN PATENT APPLICATION

(11) **EP 2 907 768 A1**
(43) Date of publication of application: **19.08.2015**
(21) Application number: 14155279.4
(22) Date of filing: 14.02.2014
(51) Int. Cl.: B65D 77/02, B65D 85/10

(54) **Container including a metallic wrapper**

(71) Applicant: Philip Morris Products S.A., 2000 Neuchâtel (CH)
(72) Inventor: Slooff, Arjen Hamilcar, 1018 Lausanne (CH)
(74) Representative: Dowling, Ian

(57) **Abstract**

A container (10) of consumer goods, the container (10) comprising an outer housing (12) and a bundle of consumer goods contained within the outer housing (12). The bundle comprises a wrapper (20) wrapped around one or more consumer goods, the wrapper (20) formed from a sheet material (30). The sheet material (30) comprises a translucent layer (32) having a first surface (36) and a second surface (38), and a metallic layer (34) at least partially overlying at least a portion of the first surface (36) of the translucent layer (32). The metallic layer (34) is visible through at least a portion of the second surface (38) of the translucent layer (32), so that at least a portion of both surfaces of the sheet material (30) have a metallic appearance.

## Description

The present invention relates to a container of consumer goods, the container comprising one or more goods wrapped in a wrapper. The present invention also relates to a method of manufacturing the container.

Consumer goods such as smoking articles are commonly packaged in rigid box shaped containers, such as hinged lid containers having a box portion and a lid connected to the box portion about a hinge line extending across the rear wall of the container, a so called Flip-Top™ box. In some cases, the container further includes an inner frame wrapped around at least a portion of the consumer goods. This may provide further rigidity to the container and protect the consumer goods. Where the inner frame extends above an upper edge of the box portion, the inner frame also provides a surface against which the lid can close.

The consumer goods may be provided within an inner bundle that is housed within the box portion and the lid. Indeed, typically, for cigarette packs, the inner bundle is produced by folding a wrapper, also known as an inner liner, around a charge of cigarettes.

In some cases it is desirable to use a wrapper having a metallic appearance; however, such wrappers can be costly to produce and can be difficult to manage in a high speed packing process. For example, forming the wrapper from a sheet of metal foil is costly when compared to alternative wrapping materials, such as paper or plastic film, particularly since a relatively thick sheet of foil may be required to prevent tearing of the wrapper during handling on the packing machinery. Metal foil is also easily wrinkled and creased when compared to paper, for example, which can make it difficult to handle foils on a production line.

Therefore, it would be desirable to provide a novel wrapper having a metallic appearance that is cost-effective to manufacture and easy to process on high speed packing machines.

The present invention provides a container of consumer goods, the container comprising an outer housing and a bundle of consumer goods contained within the outer housing. The bundle comprises a wrapper wrapped around one or more consumer goods, the wrapper formed from a sheet material. The sheet material comprises a translucent layer having a first surface and a second surface, and a metallic layer at least partially overlying at least a portion of the first surface of the translucent layer. The metallic layer is visible through at least a portion of the second surface of the translucent layer, so that at least a portion of both surfaces of the sheet material have a metallic appearance.

The term "translucent" is used herein to mean a material that passes at least about 20 percent of light incident upon the material for at least one wavelength of visible light. Hence, "transparent" is a special type of "translucent". That is, for at least one wavelength of visible light, at least about 20 percent of the light incident upon a translucent material is not reflected or absorbed by the material. The term "visible light" is used to refer to the visible portion of the electromagnetic spectrum between wavelengths of about 390 and about 750 nanometres.

The term "transparent" is used herein to mean a translucent material that passes light incident upon the material substantially without scattering. That is, light incident upon a transparent material is transmitted through the material in accordance with Snell's law. Transparent materials are a sub-set of translucent materials.

Translucency is measured using the method according to ISO 2471, which measures the opacity of a sheet material. An opacity of less than about 80 percent indicates that the material is translucent. That is, for a material having an opacity of less than about 80 percent, at least about 20 percent of the light incident upon the material is not reflected or absorbed by the material. Therefore, the translucent layer or layers of a sheet material in accordance with the present invention have an opacity of less than about 80 percent, preferably less than about 50 percent, more preferably less than about 20 percent.

Advantageously, the translucent layer functions as a carrier layer for the metallic layer so that the metallic layer can be relatively thin and therefore more cost effective to manufacture when compared to prior art wrappers that are formed only from a thick metal layer.

Furthermore, the translucent layer can be made from a material that is more easily handled on high-speed packing machines when compared to wrappers formed only from a metal material. For example, the translucent layer can be formed from paper, which is less prone to unwanted creasing and wrinkling when compared to a wrapper made only from a metal foil.

Additionally, since the translucent layer transmits a significant proportion of incident light the wrapper has a double-sided metallic appearance. That is, the metallic appearance of the metallic layer is visible through the translucent layer. Therefore, wrappers in accordance with the present invention can have a metallic appearance on both sides of the wrapper with a single layer of metallic material applied to only one side of the translucent layer.

The translucent layer may comprise a non-woven fibrous material, such as paper. For example, the translucent layer may comprise glassine paper, which is preferably formed using a supercalendering process.

To maximise the translucency of the translucent layer, the fibrous material may comprise cellulosic fibres in an amount of between about 50 and about 99 percent by weight of the translucent layer. The cellulosic fibres may have a number average width of less than about 50 nanometres, preferably less than about 30 nanometres, more preferably less than about 10 nanometres. Additionally, or alternatively, the cellulosic fibres may have a number average length of less than about 2 millimetres, preferably less than about 1 millimetre, more preferably less than about 0.5 millimetres.

In some embodiments, the translucent layer comprises one or more types of pigments. Pigments in the translucent layer may advantageously change the colour appearance of the reflection through the translucent layer from the back of the metallic layer. This avoids the application of ink or other colorants to the inside of the metallic layer.

In any of the embodiments described above, the translucent layer may have a basis weight of at least about 30 grams per square metre, preferably at least about 50 grams per square metre, more preferably at least about 100 grams per square metre, most preferably at least about 150 grams per square metre. Such ranges of basis weight are particularly preferable in those embodiments in which the translucent layer is formed from a fibrous material, since a higher basis weight typically corresponds to a higher fibre density, which increases translucency by reducing the amount of air trapped between the fibres.

Preferably, the translucent layer has a caliper of less than about 150 micrometres, more preferably less than about 80 micrometres, most preferably less than about 30 micrometres. Translucent layers having a caliper within these ranges are relatively thin and may therefore provide good translucency.

As an alternative to forming the translucent layer from a fibrous material, the translucent layer can instead comprise a polymeric film. Suitable polymeric films include polyethylene terephthalate, poly(vinyl chloride), linear low-density polyethylene, low-density polyethylene, high-density polyethylene, ultra high-density polyethylene, biaxially oriented polypropylene, cellophane, regenerated cellulose, cellulose acetate, and nylon. Forming the translucent layer from a polymeric film may be preferable in circumstances where a high degree of transparency is required. That is, polymeric films can be more easily formed with high transparency when compared to fibrous materials.

The metallic layer can be formed from a number of suitable materials, such as a metal foil laminated to the first surface of the translucent layer.

Alternatively, the metallic layer can comprise a metallic material deposited on the first surface of the translucent layer to form a partially metallised translucent layer. For example, the metallic material can be deposited by printing a metallic ink or by using a vacuum deposition process, such as physical vapour deposition or chemical vapour deposition at least on some of the surface area of the translucent layer. In those embodiments in which the metallic material is deposited on the translucent layer to form a metallised translucent layer, the metallic layer preferably has an average thickness of at least about 2.5 nanometres, more preferably at least about 10 nanometres, most preferably at least about 25 nanometres.

The metallic material may comprise any suitable metal or alloy, such as aluminium, silver, or gold. Preferably, the metallic layer comprises aluminium.

The metallic layer may completely cover the first surface of the translucent layer. Alternatively, the metallic layer may cover only a portion of the first surface of the translucent layer. For example, the metallic layer may cover at least about 50 percent of the first surface of the translucent layer, more preferably at least about 70 percent, most preferably at least about 80 percent. In embodiments in which the metallic layer covers only a portion of the translucent layer, an uncovered portion of the translucent layer can define a translucent window in the sheet material. This feature may be particularly preferable when the translucent layer comprises a transparent material, since an uncovered portion of the translucent layer can define a transparent window through which the underlying consumer goods can be observed. The window may have any desirable shape, for example in the form or combination of geometrical forms such a circles, semi circles, ovals, triangles and other polygons or a suitable combination thereof. Further, the window or windows may be in the shape of type, logos, trademarks or other icons, which may or may not relate to the content of the container.

In any of the embodiments described above, the sheet material may further comprise a lacquer applied to at least one surface of the sheet material, preferably both surfaces of the sheet material. The lacquer may provide a uniform surface on one or both surfaces of the sheet material, which can provide more consistent and reliable processing of the sheet material on high-speed manufacturing equipment. Additionally, or alternatively, providing a lacquer over the metallic layer after the metallic layer has been combined with the translucent layer can protect the metallic layer from scratching, rub-off, flaking and other damage during processing of the sheet material.

Where a lacquer is applied to one or both surfaces of the sheet material, the lacquer may be colourless to provide a natural appearance of the metallic material. Alternatively, the lacquer may be coloured to impart a coloured appearance to the sheet material. For example, where the metallic layer comprises a metal with a silver appearance, such as aluminium, the lacquer can comprise suitable pigments or metallic particles to impart a golden appearance to the metallic layer.

Containers according to the invention find particular application as packs for smoking articles such as, for example, cigarettes, cigars or cigarillos. It will be appreciated that through appropriate choices of the dimensions thereof, containers according to the invention may be designed for different numbers of conventional size, king size, super-king size, slim or super-slim cigarettes.

Through an appropriate choice of the dimensions thereof, containers according to the invention may be designed to hold different total numbers of smoking articles, or different arrangements of smoking articles. For example, through an appropriate choice of the dimensions thereof, containers according to the invention may be designed to hold a total of between ten and thirty smoking articles.

The smoking articles in the container may be arranged in different collations, depending on the total number of smoking articles. For example, the smoking articles may be arranged in a single row of six, seven, eight, nine or ten. Alternatively, the smoking articles may be arranged in two or more rows. The two or more rows may contain the same number of smoking articles. For example, the smoking articles may be arranged in: two rows of five, six, seven, eight, nine or ten; three rows of five or seven; or four rows of four, five or six. Alternatively, the two or more rows may include at least two rows containing different number of smoking articles to each other. For example, the smoking articles may be arranged in: a row of five and a row of six (5-6); a row of six and a row of seven (6-7); a row of seven and a row of eight (7-8); a middle row of five and two outer rows of six (6-5-6); a middle row of five and two outer rows of seven (7-5-7); a middle row of six and two outer rows of five (5-6-5); a middle row of six and two outer rows of seven (7-6-7); a middle row of seven and two outer rows of six (6-7-6); a middle row of nine and two outer rows of eight (8-9-8); or a middle row of six with one outer row of five and one outer row of seven (5-6-7).

Containers according to the present invention may hold smoking articles of the same type or brand, or of different types or brands. In addition, both filterless smoking articles and smoking articles with various filter tips may be contained, as well as smoking articles of differing length (for example, between about 40 mm and about 180 mm), diameter (for example, between about 4 mm and about 9 mm). In addition, the smoking articles may differ in strength of taste, resistance to draw and total particulate matter delivery. Preferably, the dimensions of the container are adapted to the length of the smoking articles, and the collation of the smoking articles. Typically, the outer dimensions of the container are between about 0.5 mm to about 5 mm larger than the dimensions of the bundle or bundles of smoking articles housed inside the container.

The length, width and depth of containers according to the invention may be such that, in the closed position, the resultant overall dimensions of the container are similar to the dimensions of a typical disposable hinge-lid pack of twenty cigarettes.

Preferably, containers according to the invention have a height of between about 60 mm and about 150 mm, more preferably a height of between about 70 mm and about 125 mm, wherein the height is measured from a top wall to a bottom wall at the exterior of the container.

Preferably, containers according to the invention have a width of between about 12 mm and about 150 mm, more preferably a width of between about 70 mm and about 125 mm, wherein the width is measured from one side housing wall to another side housing wall at the exterior of the container.

Preferably, containers according to the invention have a depth of between about 6 mm and about 100 mm, more preferably a depth of between about 12 mm and about 25 mm wherein the depth is measured from a front wall to a back wall at the exterior of the container.

Preferably, the ratio of the height of the container to the depth of the container is in between about 0.3 to 1 and about 10 to 1, more preferably between about 2 to 1 and about 8 to 1, most preferably between about 3 to 1 and 5 to 1.

Preferably, the ratio of the width of the container to the depth of the container is in between about 0.3 to 1 and about 10 to 1, more preferably between about 2 to 1 and about 8 to 1, most preferably between about 2 to 1 and 3 to 1.

As well as housing a bundle of smoking articles, the container may further comprise other consumer goods, for example matches, lighters, extinguishing means, breath-fresheners or electronics. The other consumer goods may be attached to the outside of the container, contained within the container along with the smoking articles, in a separate compartment of the container or combinations thereof.

The exterior surfaces of containers according to the invention may be printed, embossed, debossed or otherwise embellished with manufacturer or brand logos, trademarks, slogans and other consumer information and indicia.

The present invention also extends to a method of manufacturing a container in accordance with any of the embodiments described above. Accordingly, the present invention also provides a method of manufacturing a container of consumer goods, the method comprising a step of wrapping a wrapper around one or more consumer goods to form a bundle of consumer goods. The wrapper is formed from a sheet material comprising a translucent layer having a first surface and a second surface, and a metallic layer at least partially overlying at least a portion of the first surface of the translucent layer. The metallic layer is visible through at least a portion of the second surface of the translucent layer, so that at least a portion of both surfaces of the sheet material have a metallic appearance. A laminar blank is folded around the bundle of consumer goods to form an outer housing containing the bundle of consumer goods.

The present invention also extends to the use of a sheet material to form a wrapper wrapped around one or more consumer goods, the sheet material comprising a translucent layer having a first surface and a second surface, and a metallic layer at least partially overlying at least a portion of the first surface of the translucent layer. The metallic layer is visible through at least a portion of the second surface of the translucent layer, so that at least a portion of both surfaces of the sheet material have a metallic appearance.

The invention will now be further described, by way of example only, with reference to the accompanying drawings in which:
Figure 1 shows a container in accordance with the present invention; and
Figure 2 shows a cross section of the sheet material used to form the wrapper of the container shown in Figure 1.

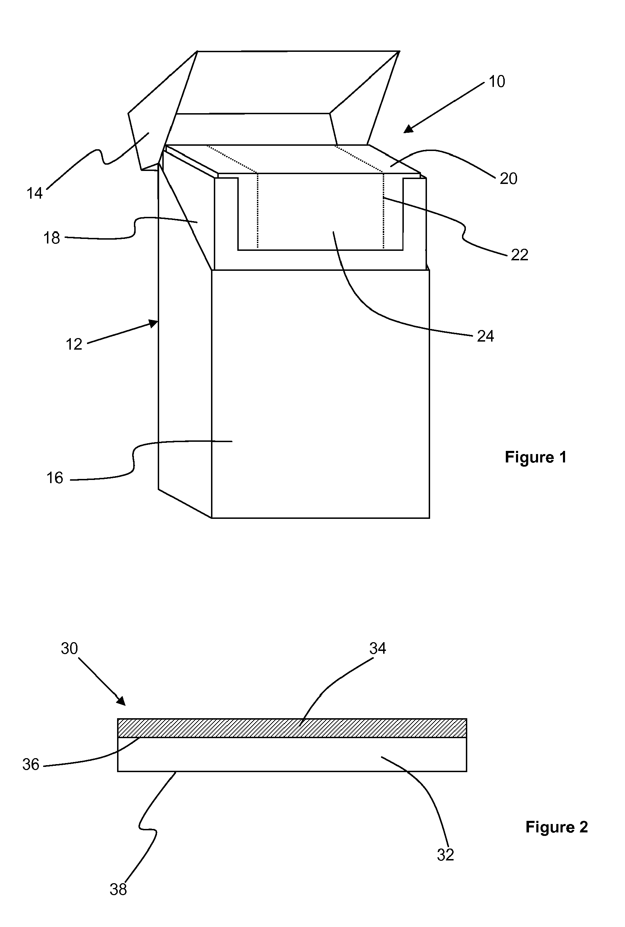

Figure 1 shows a container 10 in accordance with an embodiment of the present invention. The container 10 includes an outer housing 12 comprising a lid portion 14 connected to a box portion 16 along a hinge line extending across a back wall of the outer housing 12. An inner frame 18 is provided inside the outer housing 12 to provide a surface against which the lid portion 14 closes, and to increase the rigidity of the container 10.

A wrapped bundle of smoking articles is housed within the outer housing 12 and the inner frame 18, the wrapped bundle comprising a wrapper 20 wrapped around a plurality of smoking articles. A perforation line 22 is formed in the wrapper 20 to define a pull tab 24 that can be removed by the consumer to gain access to the smoking articles.

The wrapper 20 is formed from a sheet material 30 comprising a translucent layer 32 and a metallic layer 34, as shown more clearly in Figure 2. The translucent layer 32 is formed from glassine paper and comprises a first surface 36 and a second surface 38. The metallic layer 34 comprises an aluminium ink that has been printed onto the first surface 36 of the translucent layer 32. The aluminium ink is visible through the glassine paper so that the sheet material 30 has a metallic appearance on both sides.

## Claims

1. A container of consumer goods, comprising:
an outer housing; and
a bundle of consumer goods contained within the outer housing, the bundle comprising a wrapper wrapped around one or more consumer goods, the wrapper formed from a sheet material comprising:
a translucent layer having a first surface and a second surface; and
a metallic layer at least partially overlying at least a portion of the first surface of the translucent layer, wherein the metallic layer is visible through at least a portion of the second surface of the translucent layer.

2. A container according to claim 1, wherein the translucent layer comprises a non-woven fibrous material.

3. A container according to claim 2, wherein the fibrous material comprises glassine paper.

4. A container according to claim 2 or 3, wherein the fibrous material comprises cellulosic fibres in an amount of between 50 and 99 percent by weight of the translucent layer.

5. A container according to any preceding claim, wherein the translucent layer comprises colour pigments.

6. A container according to any preceding claim, wherein the translucent layer has a basis weight of at least 30 grams per square metre.

7. A container according to any preceding claim, wherein the translucent layer has a caliper of less than 150 micrometres, more preferably less than 80 micrometres, most preferably less than 30 micrometres.

8. A container according to claim 1, wherein the translucent layer comprises a polymeric film.

9. A container according to any preceding claim, wherein the translucent layer has an opacity of less than about 80 percent, preferably less than about 50 percent, more preferably less than about 20 percent, measured according to ISO 2471.

10. A container according to any preceding claim, wherein the metallic layer is formed from a metal foil, the sheet material comprising a laminate of the translucent layer and the metal foil.

11. A container according to any of claims 1 to 10, wherein the sheet material comprises a metallised translucent layer having a metallic material deposited on at least a portion of the first surface of the translucent layer, the deposited metallic material forming the metallic layer.

12. A container according to any preceding claim, wherein the metallic layer comprises aluminium.

13. A container according to any preceding claim, wherein the one or more consumer goods comprises a plurality of smoking articles.

14. A method of manufacturing a container of consumer goods, the method comprising:
wrapping a wrapper around one or more consumer goods to form a bundle of consumer goods, the wrapper formed from a sheet material comprising:
a translucent layer having a first surface and a second surface; and
a metallic layer at least partially overlying at least a portion of the first surface of the translucent layer, wherein the metallic layer is visible through at least a portion of the second surface of the translucent layer; and
folding a laminar blank around the bundle of consumer goods to form an outer housing containing the bundle of consumer goods.

15. Use of a sheet material to form a wrapper wrapped around one or more consumer goods, the sheet material comprising:
a translucent layer having a first surface and a second surface; and
a metallic layer overlying at least a portion of the first surface of the translucent layer, wherein the metallic layer is visible through the second surface of the translucent layer.
